# EUROPEAN PATENT SPECIFICATION

(11) **EP 3 512 302 B1**
(45) Date of publication and mention of the grant of the patent: **07.07.2021**
(21) Application number: 18213568.1
(22) Date of filing: 18.12.2018
(51) Int. Cl.: H05B 3/74, H05B 6/12

(54) **HYBRID COOKTOP HAVING IMPROVED HEAT INSULATION STRUCTURE AND HEATING PERFORMANCE**
HYBRIDKOCHFELD MIT VERBESSERTER WÄRMEISOLATIONSSTRUKTUR UND HEIZLEISTUNG
TABLE DE CUISSON HYBRIDE AYANT UNE STRUCTURE D'ISOLATION THERMIQUE ET UNE PERFORMANCE DE CHAUFFAGE AMÉLIORÉES

(30) Priority: 15.01.2018 KR 20180005179
(43) Date of publication of application: 17.07.2019
(73) Proprietor: LG Electronics Inc., Seoul 07336 (KR)
(72) Inventor: PARK, Byungkyu, Seoul 08592 (KR); MOON, Hyungwook, Seoul 08592 (KR); LEE, Youngjun, Seoul 08592 (KR)
(74) Representative: Vossius & Partner Patentanwälte Rechtsanwälte mbB

(56) References cited:
- EP-A1- 2 775 785
- DE-A1- 19 500 448
- DE-A1-102011 088 675
- DE-C1- 19 827 298
- US-A1- 2012 132 646

## Description

### FIELD

This application relates to a hybrid cooktop having improved heat insulation structure and heating performance.

### BACKGROUND

Various types of cooking devices and methods may be used to heat food in homes and restaurants. For example, gas ranges use gas as a fuel. In some cases, devices for heating an object such as a cooking pot, for example, may use electricity without using gas.

A method of heating an object using electricity can be divided into a resistance heating method and an induction heating method. In an electric resistance method, heat may be generated based on current flowing through a metal-resistant wire or a non-metallic heating element such as silicon carbide. In this method, heat may be transferred to an object through radiation or conduction. In the induction heating method, an eddy current may be generated in an object (for example, a cooking container) made of metal based on a predetermined magnitude of high-frequency power being applied to a coil. In this method, the object may be heated by the eddy current based on a magnetic field generated around the coil.

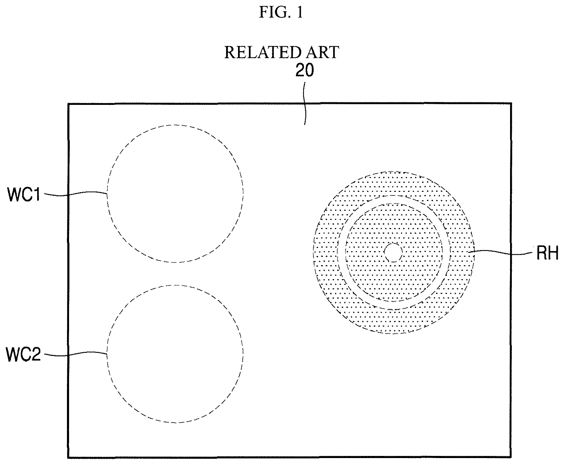

FIG. 1 is a schematic view illustrating a configuration of a cooktop according to related art.

Referring to FIG. 1, the cooktop includes a cover plate 20, working coils WC1 and WC2 to which the induction heating method is applied, and a radiant heater RH to which the electric resistance method is applied.

In some cases where an object is a magnetic body, the object may be disposed on the working coils WC1 and WC2 to be heated. In some cases where an object is a non-magnetic body (for example, a glass or ceramic container), the object may be disposed on the radiant heater RH to be heated.

In some cases, a user may misplace a magnetic object on the radiant heater RH, or a non-magnetic object on the working coils WC1 and WC2, where the objects may not be properly heated.

In some cases, the working coils WC1 and WC2 and the radiant heater RH are spaced apart from each other by a predetermined distance without a heat insulation structure therebetween. In this case, the working coils WC1 and WC2 may be damaged by heat radiated from the radiant heater RH. In some cases where the working coils WC1 and WC2 are damaged, heating performance of the working coils WC1 and WC2 may be degraded.

DE 10 2011 088675 A1 relates to a plate that has an electrical heating conductor fixed at an outer surface of a base plate, and a positioning surface for positioning dishes. The outer surface is formed opposite to the positioning surface, and the conductor is formed as a metallic conductive coating of the base plate. The coating is applied using a screen printing method or a cathodic sputtering method. A protecting layer is applied on the conductor that heats a heat holding zone at a temperature of 60-105 degree Celsius, where a portion of the conductor is formed in a loop, helical or star shape. DE 19500448A1 discloses another prior art hybrid cooktop.

### SUMMARY

The present disclosure provides a hybrid cooktop including an improved heat insulation structure that reduces heat damage (i.e., damage caused by heat) and degradation of heating performance of a working coil.

The present disclosure further provides a hybrid cooktop capable of heating an object regardless of a location and type of the object.

Various objects of this application are not limited to the above-mentioned objects, and the other objects and the advantages of this application which may be not mentioned can be understood by the following description, and more clearly understood by the implementations of this application. It will be also readily seen that the objects and the advantages of this application may be realized by means indicated in the patent claims and a combination thereof.

The present invention is defined by the features of claim 1. According to one aspect of the subject matter described in this application, a hybrid cooktop includes a case, a cover plate that is configured to couple to an upper end of the case and that is configured to seat an object to be heated, a working coil located in the case and configured to heat the object, a heating element located at a lower surface of the cover plate and configured to heat the object, a heat insulation part that is located at the lower surface of the cover plate and that surrounds the heating element, and a spacer located between the working coil and the heat insulation part.

Implementations according to this aspect may include one or more of the following features. For example, the hybrid cooktop further includes a shielding plate located at a lower surface of the working coil and configured to block a portion of a magnetic field that is generated by the working coil and that extends downward from the working coil, and a supporting member located between a lower surface of the shielding plate and a lower surface of the case, where the supporting member is configured to support the shielding plate in an upward direction. In some examples, the supporting member includes an elastomer configured to support the shielding plate in the upward direction.

In some implementations, the hybrid cooktop further includes a cooling fan located in the case and configured to cool the working coil. The cooling fan may be configured to suction air from an outside of the case and transfer air to the working coil, or to suction air from an inside of the case and discharge air to the outside of the case. In some examples, the spacer is configured to guide, to the working coil, air suctioned into the case by the cooling fan. In some implementations, the hybrid cooktop further includes a control module configured to control driving of at least one of the working coil or the heating element. In some examples, the control module is further configured to drive the working coil based on the object including a magnetic body, and to drive the heating element based on the object including a non-magnetic body.

In some implementations, the control module is further configured to drive both the working coil and the heating element based on a target heat intensity level to heat the object being greater than both a first heating intensity level of the working coil and a second heating intensity level of the heating element. In some implementations, the working coil is configured to heat the object by induction heating, and the heating element is configured to heat the object by electric resistance heating. In some examples, the heating element includes a planar heating element.

In some implementations, the heat insulation part is configured to, based on the heating element generating first heat and the object heated by driving of the working coil discharging second heat, block at least one of heat transfer of the first heat to the working coil or heat transfer of the second heat to the working coil. The spacer may be configured to, based on a portion of the first heat or a portion of the second heat being transferred through the heat insulation part, block at least one of (i) heat transfer of the portion of the first heat to the working coil or (ii) heat transfer of the portion of the second heat to the working coil.

In some implementations, the spacer has a first end configured to contact the heat insulation part and a second end configured to contact the working coil. In some implementations, the heat insulation part has a first surface spaced apart from the heating element and a second surface configured to contact the spacer. In some examples, the heat insulation part has an end configured to couple to the lower surface of the cover plate. In some examples, the spacer includes a plurality of spacers spaced apart from each other and arranged along the second surface of the heat insulation part.

In some implementations, the spacer, the working coil, and the heat insulation part are stacked in a vertical direction within the case with respect to the cover plate, where the cooling fan is configured to cause flow of air in a horizontal direction below the cover plate. In some examples, the control module is further configured to determine whether the object includes the magnetic body or the non-magnetic body. In some examples, the control module is further configured to determine whether the target heat intensity level is greater than the first heating intensity level and the second heating intensity level.

According to another aspect, a hybrid cooktop includes a case, a cover plate that is configured to couple to an upper end of the case and that is configured to seat one or more objects to be heated, a plurality of working coils located within the case, each working coil being configured to heat the one or more objects, a plurality of heating elements that are located at a lower surface of the cover plate and that are located above the plurality of working coils at positions corresponding to the plurality of working coils, each heating element being configured to heat the one or more objects, a heat insulation part that has an end configured to couple to the lower surface of the cover plate, the heat insulation part surrounding the plurality of heating elements, and a plurality of spacers located between the plurality of working coils and the heat insulation part. A number of the plurality of working coils corresponds to a number of the plurality of heating elements.

Implementations according to this aspect may include one or more of the features described above.

In addition to the above described effect, a specific effect of this application will be described together with a specific matter for implementing the following disclosure.

### BRIEF DESCRIPTION OF THE DRAWINGS

FIG. 1 is a view illustrating a cooktop according to related art.
FIG. 2 is a view illustrating an example hybrid cooktop according to the present disclosure.
FIG. 3 is a view illustrating example components provided in an example case of the hybrid cooktop of FIG. 2.
FIG. 4 is a view illustrating an example cooling fan of FIG. 3.
FIG. 5 is a view illustrating another example hybrid cooktop according to the present disclosure.
FIG. 6 is a view illustrating example components provided in an example case of the hybrid cooktop of FIG. 5.
FIG. 7 is a view illustrating an example state in which an object is disposed on the hybrid cooktop of FIG. 5.

### DETAILED DESCRIPTION

Hereinafter, example implementations according to this application will be described in detail with reference to the accompanying drawings. In the drawings, the same reference numerals are used to indicate the same or similar components.

Hereinafter, an example hybrid cooktop according to one implementation of this application will be described.

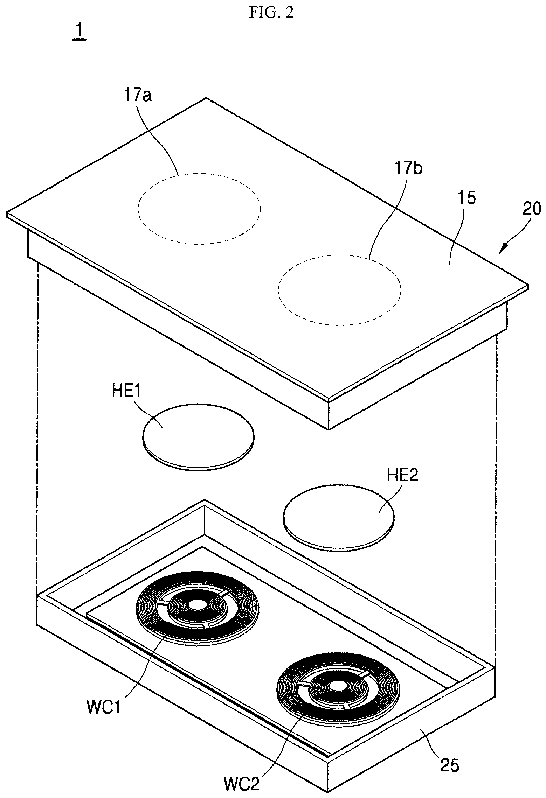

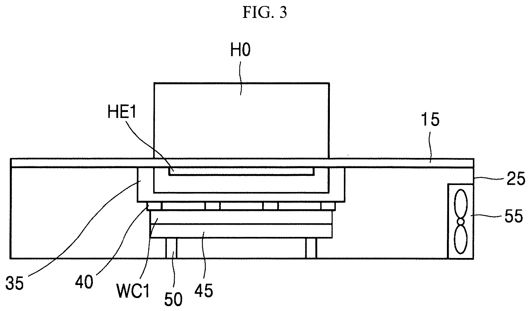

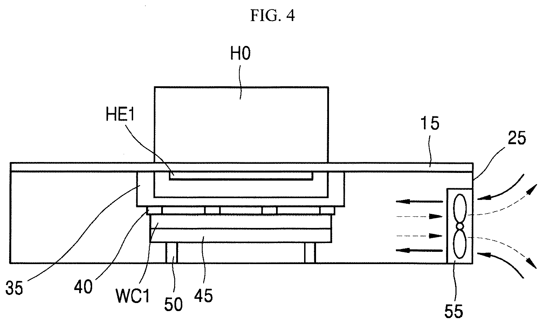

FIG. 2 is a view illustrating an example hybrid cooktop. FIG. 3 is a view illustrating example components provided in an example case of the hybrid cooktop of FIG. 2. FIG. 4 is a view illustrating an example cooling fan of FIG. 3.

Referring to FIG. 2, a hybrid cooktop 1 includes a case 25, a cover plate 20, working coils WC1 and WC2, and heating elements HE1 and HE2.

The case 25 may be provided with working coils WC1 and WC2.

In some implementations, in addition to the working coils WC1 and WC2, the case 25 may include various devices related to driving of the working coil (for example, a power supply unit configured to supply alternating current (AC) power, a rectification unit configured to rectify the AC power of the power supply unit into direct current (DC) power, an inverter unit configured to convert the DC power rectified by the rectification unit into a resonant current through a switching operation and supply the resonant current to the working coil, a control module configured to control operations of various devices provided in the hybrid cooktop 1, a relay or a semiconductor switch configured to turn on or off the working coil, and the like), but a detailed description thereof will be omitted.

The cover plate 20 may be coupled to an upper end of the case 25, and an object to be heated may be disposed thereon.

In some examples, the cover plate 20 may include a top plate portion 15 to place an object to be heated such as a cooking container thereon.

Here, the top plate portion 15 may be made of, for example, a glass material, and the top plate portion 15 may be provided with an input interface configured to receive an input from a user and forward the input to the control module, but is not limited thereto. That is, the input interface may be provided at a location other than the top plate portion 15.

In some implementations, the top plate portion 15 may visually display whether or not the working coils WC1 and WC2 or the heating elements HE1 and HE2 are driven and a heating intensity (that is, heating power) in a shape of heating areas 17a and 17b.

The working coils WC1 and WC2 may be installed in the case 25 to heat the object to be heated.

Specifically, driving of the working coils WC1 and WC2 may be controlled by the above-described control module. When the object to be heated is a non-magnetic body, the working coils WC1 and WC2 may be driven by the control module. Of course, even when the object to be heated is not a magnetic body, the working coils WC1 and WC2 may be driven by the control module. Also, the working coils WC1 and WC2 may heat the object to be heated by means of the induction heating method, and may be provided to overlap the heating elements HE1 and HE2 in a longitudinal direction (i.e., a vertical direction or an up and down direction).

FIG. 2 illustrates that the two working coils WC1 and WC2 are installed in the case 25, but is not limited thereto. That is, one working coil or three or more working coils may be installed in the case 25, but for ease of explanation, a configuration in which the two working coils WC1 and WC2 are installed in the case 25 will be described as an example.

The heating elements HE1 and HE2 may be mounted on a lower surface of the cover plate 20 to heat the object to be heated.

For example, the heating elements HE1 and HE2 may be mounted on the lower surface of the cover plate 20, that is, a lower surface of the top plate portion 15, and may be provided to overlap the working coils WC1 and WC2 in a longitudinal direction (that is, a vertical direction or an up and down direction). Accordingly, it is possible to heat the object to be heated regardless of a location and type of the object to be heated.

Also, the heating elements HE1 and HE2 may heat the object to be heated by means of the electric resistance method, and may be surrounded by the heat insulation part 35 (see FIG. 3) made of heat insulating material.

Driving of the working coils WC1 and WC2 may be controlled by the control module. When the object to be heated is a non-magnetic body, the working coils WC1 and WC2 may be driven by the control module. Of course, even when the object to be heated is not a magnetic body, the working coils WC1 and WC2 may be driven by the control module.

For example, when a heating intensity by a first working coil WC1 is a first level, a heating intensity by a first heating element HE1 is a second level and a heating intensity required for the object to be heated is a third level higher than the first and second levels, the control module may drive both the first working coil WC1 and the first heating element HE1, thereby implementing high heating power (i.e., a heating intensity corresponding to the third level).

Further, the heating elements HE1 and HE2 may include, for example, a planar heating element (i.e., a heating element having a plane form), but are not limited thereto.

FIG. 2 illustrates the two heating elements HE1 and HE2, but is not limited thereto. That is, one heating element or three or more heating elements may be mounted, but for ease of explanation, in one implementation of the present this application, a configuration in which the two heating elements HE1 and HE2 are mounted will be described as an example.

Referring to FIG. 3, the hybrid cooktop 1 according to one implementation of this application may further include a heat insulation part 35, a spacer 40, a shielding plate 45, a supporting member 50 and a cooling fan 55.

In some implementations, components disposed around the first working coil WC1 and components disposed around the second working coil (WC2 of FIG. 2) may be the same. Hereinafter, for ease of explanation, the components (the first heating element HE1, the heat insulation part 35, the spacer 40, the shielding plate 45, the supporting member 50, and the cooling fan 55) disposed around the working coil WC1 will be described.

The heat insulation part 35 may be mounted on the lower surface of the cover plate 20 to surround the first heating element HE1.

For example, the heat insulation part 35 may be mounted on the lower surface of the cover plate 20, that is, the lower surface of the top plate portion 15, and the spacer 40 may be disposed thereunder.

The heat insulation part 35 may block heat generated from the first heating element HE1 or heat generated when an object to be heated HO is heated by driving of the first working coil WC1 from being transferred to the first working coil WC1.

That is, when the object to be heated HO is heated by electromagnetic induction of the first working coil WC1, heat of the object to be heated HO may be transferred to the top plate portion 15, and heat of the top plate portion 15 may be transferred back to the first working coil. As a result, the first working coil WC1 may be damaged.

In this manner, the heat insulation part 35 may prevent the first working coil WC1 from being damaged by heat by blocking the heat transferred to the first working coil WC1, and further may prevent heating performance of the first working coil WC1 from being degraded.

In some implementations, the heat insulation part 35 may be mounted on the lower surface of the top plate portion 15 to surround the first heating element HE1, thereby preventing the heat generated from the first heating element HE1 from leaking to a lower space of the case in which the first working coil WC1 and the like are installed. As a result, it is possible to improve heating efficiency of the first heating element HE1 with respect to the object to be heated HO.

The spacer 40 may be installed between the first working coil WC1 and the heat insulation part 35.

For example, the spacer 40 may be inserted between the first working coil WC1 and the heat insulation part 35 so that the first working coil WC1 and the heat insulation part 35 are not in direct contact with each other. Accordingly, the spacer 40 may block the heat generated from the first heating element HE1 or the heat generated when the object to be heated HO is heated by driving of the first working coil WC1 from being transferred to the first working coil WC1 through the heat insulation part 35.

In this example, the spacer 40 may share a part of a role of the heat insulation part 35, thereby minimizing a thickness of the heat insulation part 35. As a result, it is possible to minimize a distance between the object to be heated HO and the first working coil WC1.

In some implementations, a plurality of spacers 40 may be provided, and the plurality of spacers may be disposed between the first working coil WC1 and the heat insulation part 35 to be spaced apart from each other. Accordingly, air sucked into the case 25 by the cooling fan 55 to be described later may be guided to the first working coil WC1 by the spacer 40.

That is, the spacer 40 may guide the air introduced into the case 25 by the cooling fan 55 to be properly transferred to the first working coil WC1, thereby improving cooling efficiency of the first working coil WC1.

The shielding plate 45 may be mounted on a lower surface of the first working coil WC1 to block a magnetic field generated downward when the first working coil WC1 is driven.

For example, the shielding plate 45 may block the magnetic field generated downward when the first working coil WC1 is driven, and may be supported upward by the supporting member 50.

In some examples, the supporting member 50 may be installed between a lower surface of the shielding plate 45 and a lower surface of the case 25 to support the shielding plate 45 upward.

Specifically, the supporting member 50 may indirectly support the heat insulation part 35 and the first working coil WC1 upward by supporting the shielding plate 45 upward, whereby the heat insulation part 35 may be brought into close contact with the top plate portion 15.

It may be possible to reduce or prevent the heat generated from the first heating element HE1 from leaking out of the heat insulation part 35, and to keep a distance between the first working coil WC1 and the object to be heated HO constant.

In some implementations, the supporting member 50 may include, for example, an elastomer (for example, a spring) configured to support the shield plate 45 upward, but is not limited thereto.

In some implementations, the cooling fan 55 may be installed in the case 25 to cool the first working coil WC1.

For example, driving of the cooling fan 55 may be controlled by the control module, and may be installed on a side wall of the case 25. Of course, the cooling fan 55 may be installed at a location other than the side wall of the case 25. For ease of explanation, in the implementations of this application, a configuration in which the cooling fan 55 is installed on the side wall of the case 25 will be described as an example.

Further, as illustrated in FIG. 4, the cooling fan 55 may suck air outside the case 25 and transfer the air to the first working coil WC1, or may suck air (particularly, heat) inside the case 25 and discharge the air to an outside of the case 25.

It may be possible to efficiently cool of inner components (particularly, the first working coil WC1) of the case 25.

Also, as described above, the air outside the case 25, which is transferred to the first working coil WC1 by the cooling fan 55, may be guided by the spacer 40 to the first working coil WC1. Accordingly, it is possible to directly and efficiently cool the first working coil WC1, thereby improving durability of the first working coil WC1 (i.e., improving the durability by preventing heat damage).

In some implementations, although not illustrated in the drawings, the hybrid cooktop 1 may further include a control module (not illustrated; that is, the above-described control module) configured to control driving of at least one of the first working coil WC1, the first heating element HE1, or the cooling fan 55. Also, the control module may control driving of at least one of the first working coil WC1, the first heating element HE1, or the cooling fan 55 based on the input of the user supplied from the above-described input interface.

For example, the control module may drive the first working coil WC1 when the object to be heated HO is a magnetic body, and may drive the first heating element HE1 when the object to be heated HO is a non-magnetic body. Of course, when the heating intensity by the first working coil WC1 is the first level, the heating intensity by the first heating element HE1 is the second level, and the heating intensity required for the object to be heated HO is the third level higher than the first and second levels, the control module may drive both the first working coil WC1 and the first heating element HE1.

The control module may control overall driving of the hybrid cooktop 1 in addition to the above-described components, and thus a detailed description thereof will be omitted.

As described above, the hybrid cooktop 1 according to this application may prevent the working coils WC1 and WC2 from being damaged by the heat generated from the heating elements HE1 and HE2 or the heat generated when the object to be heated HO is heated through an improved heat insulation structure, thereby preventing heating performance of the working coils WC1 and WC2 from being degraded.

Further, the hybrid cooktop 1 according to this application may heat the object to be heated HO regardless of a location and type of the object to be heated HO to be heated. Accordingly, the user may place the object to be heated HO at an arbitrary location on the top plate portion 15 of the hybrid cooktop 1 (i.e., an arbitrary location among locations where a heating area is displayed) without having to determine whether the object to be heated HO is a magnetic body or a non-magnetic body, thereby improving ease of use.

Hereinafter, a hybrid cooktop according to another implementation of this application will be described.

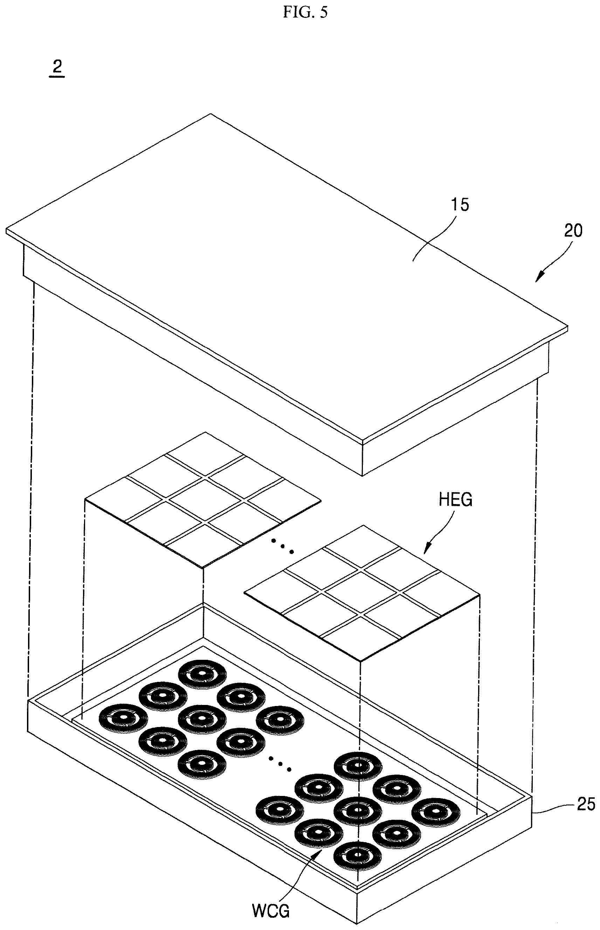

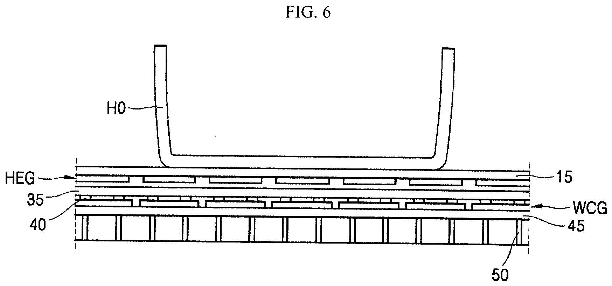

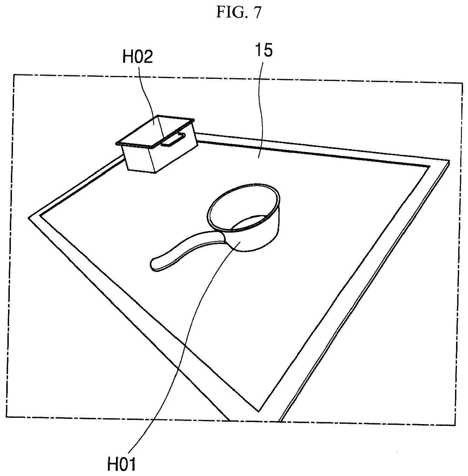

FIG. 5 is a view illustrating an example hybrid cooktop according to another implementation of this application. FIG. 6 is a view illustrating example components provided in an example case of the hybrid cooktop of FIG. 5. FIG. 7 is a view illustrating an example state in which an object to be heated is disposed on the hybrid cooktop of FIG. 5.

In some implementations, a hybrid cooktop 2 may correspond to the hybrid cooktop 1 of FIG. 2 except for some components and effects, and thus a difference therebetween will be mainly described.

Referring to FIGS. 5 and 6, the hybrid cooktop 2 may be a zone free type cooktop, unlike the hybrid cooktop 1 of FIG. 2.

In some implementations, the hybrid cooktop 2 may include a case 25, a cover plate 20, a plurality of heating elements HEG, a heat insulation part 35, a spacer 40, a plurality of working coils WCG, a shielding plate 45, a supporting member 50, a cooling fan, and a control module.

According to the present invention, the plurality of heating elements HEG and the plurality of working coils WCG are disposed to correspond to each other on a one-to-one basis.

In the implementations of this application, a configuration in which the plurality of heating elements HEG and the plurality of working coils WCG are disposed to correspond to each other on a one-to-one basis will be described as an example.

That is, in the hybrid cooktop 2 which is a zone free type cooktop including the plurality of heating elements HEG and the plurality of working coils WCG, some or all of the plurality of working coils WCG may simultaneously heat one object to be heated HO or some or all of the plurality of heating elements HEG may simultaneously heat one object to be heated HO.. Of course, it is also possible to heat an object to be heated HO1 using both some or all of the plurality of working coils WCG and some or all of the plurality of heating elements HEG.

Therefore, as illustrated in FIG. 7, in an area where the plurality of working coils WCG and the plurality of heating elements HEG are present (for example, an area of the top plate portion 15; the plurality of working coils WCG and the plurality of heating elements HEG are present under the top plate portion 15), it is possible to heat objects to be heated HO1 and HO2 regardless of sizes, locations and types of the objects to be heated HO1 and HO2.

## Claims

1. A hybrid cooktop (1) comprising:
a case (25);
a cover plate (20) configured to couple to an upper end of the case (25), the cover plate (20) being configured to seat an object to be heated;
one or more working coils (WC1, WC2) located in the case (25), each working coil being configured to heat the object;
one or more heating elements (HE1, HE2) located at a lower surface of the cover plate (20) and located above the plurality of working coils (WC1, WC2) at positions corresponding to the one or more working coils (WC1, WC2), each heating element being configured to heat the object;
a heat insulation part (35) that is located at the lower surface of the cover plate (20) and that surrounds the one or more heating elements (HE1, HE2); and
a spacer (40) located between the one or more working coils (WC1, WC2) and the heat insulation part (35).

2. The hybrid cooktop (1) of claim 1, wherein the heat insulation part (35) has an end configured to couple to the lower surface of the cover plate (20).

3. The hybrid cooktop (1) of claims 1 or 2, further comprising:
a shielding plate (45) located at a lower surface of the one or more working coils (WC1, WC2) and configured to block a portion of a magnetic field that is generated by the one or more working coils (WC1, WC2) and that extends downward from the one or more working coils (WC1, WC2); and
a supporting member (50) located between a lower surface of the shielding plate (45) and a lower surface of the case (25), the supporting member (50) being configured to support the shielding plate (45) in an upward direction.

4. The hybrid cooktop (1) of claim 3, wherein the supporting member (50) comprises an elastomer configured to support the shielding plate (45) in the upward direction.

5. The hybrid cooktop (1) of any one of claims 1 to 4, further comprising a cooling fan (55) located in the case (25) and configured to cool the one or more working coils (WC1, WC2).

6. The hybrid cooktop (1) of claim 5, wherein the cooling fan (55) is configured to:
suction air from an outside of the case (25) and transfer air to the one or more working coils (WC1, WC2), or
suction air from an inside of the case (25) and discharge air to the outside of the case (25).

7. The hybrid cooktop (1) of claim 5 or 6, wherein the spacer (40) is configured to guide, to the one or more working coils (WC1, WC2), air suctioned into the case (25) by the cooling fan (55).

8. The hybrid cooktop (1) of any one of claims 1 to 7, further comprising a control module configured to control driving of the one or more working coils (WC1, WC2) or the heating element (HE1, HE2).

9. The hybrid cooktop (1) of claim 8, further comprising an input interface configured to receive an input from a user and forward the input to the control module, wherein the control module is further configured to:
drive the one or more working coils (WC1, WC2) for the object comprising a magnetic body based on the input; and
drive the one or more heating elements (HE1, HE2) for the object comprising a non-magnetic body based on the input.

10. The hybrid cooktop (1) of claims 8 or 9, wherein the control module is further configured to drive both the working coils (WC1, WC2) and the one or more heating elements (HE1, HE2) based on a target heat intensity level to heat the object being greater than both a first heating intensity level of the one or more working coils (WC1, WC2) and a second heating intensity level of the one or more heating elements (HE1, HE2).

11. The hybrid cooktop (1) of any one of claims 1 to 10, wherein the working coils (WC1, WC2) is configured to heat the object by induction heating, and
wherein the one or more heating elements (HE1, HE2) is configured to heat the object by electric resistance heating.

12. The hybrid cooktop (1) of any one of claims 1 to 11, wherein the one or more heating elements (HE 1, HE2) comprises a planar heating element.

13. The hybrid cooktop (1) of any one of claims 1 to 12, wherein the heat insulation part (35) is configured to, based on the one or more heating elements (HE1, HE2) generating first heat and the object heated by driving of the one or more working coils (WC1, WC2) discharging second heat, block at least one of heat transfer of the first heat to the one or more working coils (WC1, WC2) or heat transfer of the second heat to the one or more working coils (WC1, WC2), and
wherein the spacer (40) is configured to, based on a portion of the first heat or a portion of the second heat being transferred through the heat insulation part (35), block at least one of (i) heat transfer of the portion of the first heat to the one or more working coils (WC1, WC2) or (ii) heat transfer of the portion of the second heat to the one or more working coils (WC1, WC2).

14. The hybrid cooktop (1) of any one of claims 1 to 13, wherein the spacer (40) has a first end configured to contact the heat insulation part (35) and a second end configured to contact the one or more working coils (WC1, WC2).

15. The hybrid cooktop (1) of any one of claims 1 to 14, wherein the heat insulation part (35) has a first surface spaced apart from the one or more heating elements (HE1, HE2) and a second surface configured to contact the spacer (40).

## Patentansprüche

1. Hybridkochfeld (1), das aufweist:
ein Gehäuse (25);
eine Verkleidungsplatte (20), die eingerichtet ist, mit einem oberen Ende des Gehäuses (25) verbunden zu sein, wobei die Verkleidungsplatte (20) eingerichtet ist, einen zu erwärmenden Gegenstand darauf abzusetzen;
eine oder mehrere Arbeitsspulen (WC1, WC2), die sich im Gehäuse (25) befinden, wobei jede Arbeitsspule eingerichtet ist, den Gegenstand zu erwärmen;
ein oder mehrere Heizelemente (HE1, HE2), die sich an einer Unterseite der Verkleidungsplatte (20) befinden und sich über der Vielzahl der Arbeitsspulen (WC1, WC2) an Positionen befinden, die der einen oder den mehreren Arbeitsspulen (WC1, WC2) entsprechen, wobei jedes Heizelement eingerichtet ist, den Gegenstand zu erwärmen;
ein Wärmeisolationsteil (35), das sich an der Unterseite der Verkleidungsplatte (20) befindet und das das eine oder die mehreren Heizelemente (HE1, HE2) umgibt; und
ein Abstandselement (40), das sich zwischen dem einen oder den mehreren Arbeitsspulen (WC1, WC2) und dem Wärmeisolationsteil (35) befindet.

2. Hybridkochfeld (1) nach Anspruch 1, wobei das Wärmeisolationsteil (35) ein Ende aufweist, das eingerichtet ist, mit der Unterseite der Verkleidungsplatte (20) verbunden zu werden.

3. Hybridkochfeld (1) nach Anspruch 1 oder 2, das weiterhin aufweist:
eine Abschirmplatte (45), die sich an einer Unterseite von der einen oder den mehreren Arbeitsspulen (WC1, WC2) befindet und eingerichtet ist, einen Bereich eines Magnetfelds zu sperren, das durch die eine oder die mehreren Arbeitsspulen (WC1, WC2) erzeugt wird und von der einen oder den mehreren Arbeitsspulen (WC1, WC2) nach unten verläuft; und
ein Halteelement (50), das sich zwischen einer Unterseite der Abschirmplatte (45) und einer Unterseite des Gehäuses (25) befindet, wobei das Halteelement (50) eingerichtet ist, die Abschirmplatte (45) in einer Richtung nach oben zu halten.

4. Hybridkochfeld (1) nach Anspruch 3, wobei das Halteelement (50) ein Elastomer aufweist, das eingerichtet ist, die Abschirmplatte (45) in der Richtung nach oben zu halten.

5. Hybridkochfeld (1) nach einem der Ansprüche 1 bis 4, das weiterhin einen Lüfter (55) aufweist, der sich im Gehäuse (25) befindet und eingerichtet ist, die eine oder die mehreren Arbeitsspulen (WC1, WC2) zu kühlen.

6. Hybridkochfeld (1) nach Anspruch 5, wobei der Lüfter (55) dazu eingerichtet ist:
Luft von außerhalb des Gehäuses (25) anzusaugen und Luft an die eine oder die mehreren Arbeitsspulen (WC1, WC2) zu übertragen, oder
Luft von innerhalb des Gehäuses (25) anzusaugen und Luft zur Außenseite des Gehäuses (25) auszuleiten.

7. Hybridkochfeld (1) nach Anspruch 5 oder 6, wobei das Abstandselement (40) eingerichtet ist, in das Gehäuse (25) durch den Lüfter (55) eingesogene Luft der einen oder den mehreren Arbeitsspulen (WC1, WC2) zuzuführen.

8. Hybridkochfeld (1) nach einem der Ansprüche 1 bis 7, das weiterhin ein Steuermodul aufweist, das eingerichtet ist, den Antrieb von der einen oder den mehreren Arbeitsspulen (WC1, WC2) oder dem Heizelement (HE1, HE2) zu steuern.

9. Hybridkochfeld (1) nach Anspruch 8, das weiterhin eine Eingabeschnittstelle aufweist, die eingerichtet ist, eine Eingabe von einem Benutzer zu empfangen und die Eingabe an das Steuermodul weiterzuleiten, wobei das Steuermodul weiterhin dazu eingerichtet ist:
die eine oder die mehreren Arbeitsspulen (WC1, WC2) für den Gegenstand, der einen Magnetkörper aufweist, basierend auf der Eingabe zu betreiben; und
das eine oder die mehreren Heizelemente (HE1, HE2) für den Gegenstand, der einen Nicht-Magnetkörper aufweist, basierend auf der Eingabe zu betreiben.

10. Hybridkochfeld (1) nach Anspruch 8 oder 9, wobei das Steuermodul weiterhin eingerichtet ist, beide Arbeitsspulen (WC1, WC2) und das eine oder die mehreren Heizelemente (HE1, HE2) basierend auf einem Zielheizintensitätsniveau zu betreiben, um den Gegenstand zu erwärmen, das höher als beide von einem ersten Heizintensitätsniveau von der einen oder den mehreren Arbeitsspulen (WC1, WC2) und einem zweiten Heizintensitätsniveau von dem einen oder den mehreren Heizelementen (HE1, HE2) ist.

11. Hybridkochfeld (1) nach einem der Ansprüche 1 bis 10, wobei die Arbeitsspulen (WC1, WC2) eingerichtet sind, den Gegenstand durch Induktionsheizung zu erwärmen, und
wobei das eine oder die mehreren Heizelemente (HE1, HE2) eingerichtet sind, den Gegenstand durch elektrische Widerstandsheizung zu erwärmen.

12. Hybridkochfeld (1) nach einem der Ansprüche 1 bis 11, wobei das eine oder die mehreren Heizelemente (HE1, HE2) ein planares Heizelement aufweisen.

13. Hybridkochfeld (1) nach einem der Ansprüche 1 bis 12, wobei das Wärmeisolationsteil (35) eingerichtet ist, basierend auf dem einen oder den mehreren Heizelementen (HE1, HE2), die die erste Wärme erzeugen, und den Gegenstand, der durch Betreiben von der einen oder den mehreren die zweite Wärme abstrahlenden Arbeitsspulen (WC1, WC2) erwärmten, wenigstens eine von der Wärmeübertragung der ersten Wärme an die eine oder die mehreren Arbeitsspulen (WC1, WC2) oder der Wärmeübertragung der zweiten Wärme an die eine oder die mehreren Arbeitsspulen (WC1, WC2) zu sperren, und
wobei das Abstandselement (40) eingerichtet ist, basierend auf einem Anteil der ersten Erwärmung oder einem Anteil der zweiten Erwärmung, die über das gleiche Wärmeisolationsteil (35) übertragen werden, wenigstens eine von der (i)
Wärmeübertragung des Anteils der ersten Erwärmung an die eine oder die mehreren Arbeitsspulen (WC1, WC2) oder die (ii) Wärmeübertragung des Anteils der zweiten Wärme an die eine oder die mehreren Arbeitsspulen (WC1, WC2) zu sperren.

14. Hybridkochfeld (1) nach einem der Ansprüche 1 bis 13, wobei das Abstandselement (40) ein erstes Ende aufweist, das eingerichtet ist, mit dem Wärmeisolationsteil (35) in Kontakt zu stehen, und ein zweites Ende, das eingerichtet ist, mit der einen oder den mehreren Arbeitsspulen (WC1, WC2) in Kontakt zu stehen.

15. Hybridkochfeld (1) nach einem der Ansprüche bis 14, wobei das Wärmeisolationsteil (35) eine erste Fläche hat, die von dem einen oder den mehreren Heizelementen (HE1, HE2) beabstandet ist, und eine zweite Fläche, die eingerichtet ist, mit dem Abstandselement (40) in Kontakt zu stehen.

## Revendications

1. Table de cuisson hybride (1) comprenant :
un boîtier (25) ;
une plaque de recouvrement (20) configurée pour être couplée à une extrémité supérieure du boîtier (25), la plaque de recouvrement (20) étant configurée pour accueillir un objet devant être chauffé ;
une ou plusieurs bobines actives (WC1, WC2) situées dans le boîtier (25), chaque bobine active étant configurée pour chauffer l'objet ;
un ou plusieurs éléments chauffants (HE1, HE2) situés sur une surface inférieure de la plaque de recouvrement (20) et situés au-dessus de la pluralité de bobines actives (WC1, WC2) à des positions correspondant aux une ou plusieurs bobines actives (WC1, WC2), chaque élément chauffant étant configuré pour chauffer l'objet ;
une partie d'isolation de chaleur (35) qui est située sur la surface inférieure de la plaque de recouvrement (20) et qui entoure les un ou plusieurs éléments chauffants (HE1, HE2) ; et
un élément de séparation (40) situé entre les une ou plusieurs bobines actives (WC1, WC2) et la partie d'isolation de chaleur (35).

2. Table de cuisson hybride (1) selon la revendication 1, dans laquelle la partie d'isolation de chaleur (35) a une extrémité configurée pour se coupler à la surface inférieure de la plaque de recouvrement (20).

3. Table de cuisson hybride (1) selon les revendications 1 ou 2, comprenant en outre :
une plaque de blindage (45) située sur une surface inférieure des une ou plusieurs bobines actives (WC1, WC2) et configurée pour bloquer une portion d'un champ magnétique qui est généré par les une ou plusieurs bobines actives (WC1, WC2) et qui s'étend vers le bas depuis les une ou plusieurs bobines actives (WC1, WC2) ; et
un organe de support (50) situé entre une surface inférieure de la plaque de blindage (45) et une surface inférieure du boîtier (25), l'organe de support (50) étant configuré pour supporter la plaque de blindage (45) dans une direction vers le haut.

4. Table de cuisson hybride (1) selon la revendication 3, dans laquelle l'organe de support (50) comprend un élastomère configuré pour supporter la plaque de blindage (45) dans la direction vers le haut.

5. Table de cuisson hybride (1) selon l'une quelconque des revendications 1 à 4, comprenant en outre un ventilateur de refroidissement (55) situé dans le boîtier (25) et configuré pour refroidir les une ou plusieurs bobines actives (WC1, WC2).

6. Table de cuisson hybride (1) selon la revendication 5, dans laquelle le ventilateur de refroidissement (55) est configuré pour :
aspirer de l'air depuis un extérieur du boîtier (25) et transférer de l'air vers les une ou plusieurs bobines actives (WC1, WC2), ou
aspirer de l'air depuis un intérieur du boîtier (25) et évacuer de l'air vers extérieur du boîtier (25).

7. Table de cuisson hybride (1) selon la revendication 5 ou 6, dans laquelle l'élément de séparation (40) est configuré pour guider l'air aspiré dans le boîtier (25) par le ventilateur de refroidissement (55) vers les une ou plusieurs bobines actives (WC1, WC2).

8. Table de cuisson hybride (1) selon l'une quelconque des revendications 1 à 7, comprenant en outre un module de commande configuré pour commander l'excitation des une ou plusieurs bobines actives (WC1, WC2) ou de l'élément chauffant (HE1, HE2).

9. Table de cuisson hybride (1) selon la revendication 8, comprenant en outre une interface d'entrée configurée pour recevoir une entrée provenant d'un utilisateur et transmettre l'entrée au module de commande, dans laquelle le module de commande est en outre configuré pour :
exciter les une ou plusieurs bobines actives (WC1, WC2) pour l'objet comprenant un corps magnétique sur la base de l'entrée ; et
exciter les un ou plusieurs éléments chauffants (HE1, HE2) pour l'objet comprenant un corps non magnétique sur la base de l'entrée.

10. Table de cuisson hybride (1) selon les revendications 8 ou 9, dans laquelle le module de commande est en outre configuré pour exciter à la fois les bobines actives (WC1, WC2) et les un ou plusieurs éléments chauffants (HE1, HE2) sur la base d'un niveau d'intensité de chaleur cible pour chauffer l'objet, qui est supérieur à la fois à un premier niveau d'intensité de chauffage des une ou plusieurs bobines actives (WC1, WC2) et à un second niveau d'intensité de chauffage des un ou plusieurs éléments chauffants (HE1, HE2).

11. Table de cuisson hybride (1) selon l'une quelconque des revendications 1 à 10, dans laquelle les bobines actives (WC1, WC2) sont configurées pour chauffer l'objet par chauffage par induction, et
dans laquelle les un ou plusieurs éléments chauffants (HE1, HE2) sont configurés pour chauffer l'objet par chauffage par résistance électrique.

12. Table de cuisson hybride (1) selon l'une quelconque des revendications 1 à 11, dans laquelle les un ou plusieurs éléments chauffants (HE1, HE2) comprennent un élément chauffant plan.

13. Table de cuisson hybride (1) selon l'une quelconque des revendications 1 à 12, dans laquelle la partie d'isolation de chaleur (35) est configurée pour, sur la base des un ou plusieurs éléments chauffants (HE1, HE2) générant une première chaleur, et de l'objet chauffé en excitant une ou plusieurs bobines actives (WC1, WC2) évacuant une seconde chaleur, bloquer au moins l'un parmi un transfert de chaleur de la première chaleur vers les une ou plusieurs bobines actives (WC1, WC2) ou un transfert de chaleur de la seconde chaleur vers les une ou plusieurs bobines actives (WC1, WC2), et
dans laquelle l'élément de séparation (40) est configuré pour, sur la base d'une portion de la première chaleur ou d'une portion de la seconde chaleur qui est transférée à travers la partie d'isolation de chaleur (35), bloquer au moins l'un parmi (i) un transfert de chaleur de la portion de la première chaleur vers les une ou plusieurs bobines actives (WC1, WC2) ou (ii) un transfert de chaleur de la portion de la seconde chaleur vers les une ou plusieurs bobines actives (WC1, WC2).

14. Table de cuisson hybride (1) selon l'une quelconque des revendications 1 à 13, dans laquelle l'élément de séparation (40) a une première extrémité configurée pour entrer en contact avec la partie d'isolation de chaleur (35) et une seconde extrémité configurée pour entrer en contact avec les une ou plusieurs bobines actives (WC1, WC2).

15. Table de cuisson hybride (1) selon l'une quelconque des revendications 1 à 14, dans laquelle la partie d'isolation de chaleur (35) a une première surface espacée des un ou plusieurs éléments chauffants (HE1, HE2) et une seconde surface configurée pour entrer en contact avec l'élément de séparation (40).
